# EUROPEAN PATENT APPLICATION

(11) **EP 2 713 331 A1**
(43) Date of publication of application: **02.04.2014**
(21) Application number: 12368028.2
(22) Date of filing: 27.09.2012
(51) Int. Cl.: G06Q 30/02

(54) **Method, apparatus an system for monitoring competition price and for providing corrective messages**

(71) Applicant: Amadeus S.A.S., 06410 Biot (FR)
(72) Inventor: Dufresnes, Thierry, 06650 Opio (FR); Amadieu, Olivier, 06560 Valbonne (FR); Piat, Benjamin, 06600 Antibes (FR)
(74) Representative: Lippich, Wolfgang

(57) **Abstract**

A computer-implemented method of detecting price discrepancies over time and providing analysis messages comprises:
- retrieving a set of price results based on at least one parameter selected from a set of parameters;
- detecting a pattern in the set of price results;
- accessing and updating a pattern cause database for identifying at least one predetermined pattern cause based on the detected pattern;
- analyzing each predetermined pattern cause and associated corrective actions; and
- generating at least one analysis message containing:
- the at least predetermined pattern cause and the associated corrective actions.

## Description

### TECHNICAL FIELD:

The present invention relates generally to data and information processing for computer-implemented database systems, and more particularly to methods, devices and systems for monitoring competition price and detecting price discrepancies or competitive disadvantages in order to provide corrective messages or corrective actions to remedy the fares discrepancies or to remove or reduce the competitive disadvantages in particular in the travel reservation and booking systems.

### BACKGROUND:

A computerized travel system is organized around a Global Distribution System GDS. The GDS system may be proprietary computer systems allowing real-time access to airlines fares, schedules, and seating availability and other data. It can be accessed by travel vendors such as travel agencies, online travel vendors and travel companies to make the booking.

Travel vendors use to handle multiple fares for various products emanating from several travel carriers (e.g. airlines) thereby involving plural databases. This confers a strong complexity to the monitoring of competition prices and to price comparison processes.

### SUMMARY

In one example of embodiment, a computer-implemented method of detecting price discrepancies over time and providing analysis messages comprises the steps of:
- retrieving a set of price results based on at least one parameter selected from a set of parameters;
- detecting at least one pattern in the set of price results;
- accessing a pattern cause database for identifying at least one predetermined pattern cause based on the at least one pattern;
- analyzing each predetermined pattern cause and associated corrective actions; and
- generating at least one analysis message containing:
- the at least predetermined pattern cause and the associated corrective actions.

In another example of embodiment, an apparatus for detecting price discrepancies over time and providing corrective messages comprises:
- a results generator for receiving a request from a user containing at least one parameter selected from a set of parameters and for retrieving a set of price results based on the request;
- a pattern detector for detecting at least one pattern in the set of price results;
- an advice generator for accessing a pattern cause database for identifying at least one predetermined pattern cause based on the at least one pattern and for analyzing each predetermined pattern cause and associated corrective actions, and for generating corrective messages containing:
- the at least predetermined pattern cause; and
- the associated corrective actions.

The exemplary embodiments also encompass a non-transitory computer-readable medium that contains software program instructions, where execution of the software program instructions by at least one data processor results in performance of operations that comprise execution of the method of the present invention.

A computer-implemented travel reservation and booking system comprises a plurality of databases:
- a price results database containing price results generated based on a request of a user containing at least one parameter selected from a set of parameters;
- a pattern causes database containing predetermined pattern causes associated with corrective actions used for detecting a pattern of the price results;
- an invalidation database containing invalidation data for performing an invalidation control of the detected pattern; and
- a pricing database containing pricing data for performing a pricing validation of the detected pattern;
wherein based on the detected pattern, the pattern causes and the corrective actions are identified and aggregated in an analysis message to be transmitted to the user.

### BRIEF DESCRIPTION OF THE DRAWINGS

The foregoing and other aspects of the embodiments of the present invention are made more evident in the following Detailed Description, when read in conjunction with the attached Figures, wherein:
Figure 1A is an exemplary block diagram showing an architecture of the database system and its data flows according to the present invention.
Figure 1B is an exemplary block diagram showing the data flows upstream the recommendation advisor and more specifically the inputs and outputs of the pattern detector according to the present invention.
Figure 2 shows an exemplary detailed view of the competition price monitoring for detecting price discrepancies at a city level between Paris and New York City according to the present invention.
Figure 3 is an example of continuous graphs showing a set of price results obtained from the parameters selected by the Customer according to the present invention.
Figure 4 is an example of segmented graphs of price results filtered by the pattern detector according to the present invention.
Figure 5A is an example of segmented graphs of price results associated with events detected by the pattern detector according to the present invention.
Figure 5B is an example of table showing the list of events and their related characteristics which are associated with the set of price results used by the pattern detector to detect positioning patterns according to the present invention.
Figure 6A is an example of table showing the grouping of similar events with their related characteristics into different positioning patterns according to the present invention.
Figure 6B is a graphical illustration of the table showing the grouping of similar events and their positioning patterns with their shapes and repetitions according to the present invention.
Figure 7 shows an example of table associating detected positioning patterns to potential causes and corrective actions stored in the pattern causes database.
Figure 8A is an example of block diagram showing the data flows as inputs and outputs of the advice generator and more specifically the pattern inputs and unitary advice outputs of the advice generator according to the present invention.
Figure 8B shows the step of retrieving the predetermining causes performed by the advice generator by accessing the pattern causes database according the present invention.
Figure 8C shows the step of carrying out a data analysis of the detected causes performed by the advice generator by accessing the invalidation and the pricing databases according to the present invention.
Figure 8D shows the step of carrying out a full data analysis performed by the advice generator by accessing the invalidation and the pricing databases according to the present invention.
Figure 8E shows the building of a unitary advice by the Advice generator.
Figure 8F shows the step of updating the pattern causes performed by the advice generator by accessing the pattern causes database according the present invention.
Figure 9 shows an example of advice aggregator receiving unitary advices from the advice generator and generating aggregated advices.
Figure 10 shows an example of cause aggregation at different levels from city level to worldwide level.
Figure 11 shows an example of global view of the competition price monitoring according to the present invention detecting price discrepancies at a worldwide level.
Figure 12 shows an example of global view of the competition price monitoring according to the present invention detecting price discrepancies at a continent level between Europe and North America.
Figure 13 shows an example of global view of the competition price monitoring according to the present invention detecting price discrepancies at a country level.

### DETAILED DESCRIPTION

Although the following description is given in the context of an application to the airline industry, it does not represent a limiting example since the present invention is applicable to all sorts of travel and tourism products such as hotel rooms, car rental, railways tickets or the like.

A positioning analysis is a process of comparing the prices offered by a using entity such as a travel vendor which can be either a travel agency or an airline company with the prices found on the market or offered by the competition. For the rest of the description a travel vendor is taken as an example of using entity.

The positioning analysis functions are:
- to detect the competitive disadvantages and rank them by priority order;
- look up for their causes in a database and rank them by priority;
- to provide messages of explanations of the causes of these competitive disadvantages;
- to provide corrective messages or actions to remedy, reduce or remove these competitive disadvantages The corrective messages are also be referred as "corrective advices" in the following description.

The invention provides a tool that can help a user perform all or any of the above goals. Even though the description given hereafter is in the context of providing advice for correcting competition issues, the invention can simply reach the objective of providing information on a current situation of the competition. In the embodiments described below the messages are corrective message (this means that the user should normally take them into account to effectively apply corrective actions). However this example is not limiting and the message may simply aim at providing the user with a report analysing the current situation of the competition, with advice as to the potential actions that may be taken.

In addition the invention can be used to detect price discrepancy even though it does not reflect a competitive disadvantage for the using entity. In that case the invention is mainly a tool for analysing the prices of various selling entities.

Traditionally, the positioning analysis is performed manually by an agent at the pace of a human intellectual capacity. It is a complex and time consuming task that requires an in-depth expertise of the market and the competition. Because of the limited human intellectual capacity in term of data quantity memorisation and data processing speed, the scope of the traditional positioning analysis is often limited to a few markets. Therefore, the difficulty of processing large volumes of data such as those involved when all markets are targeted by an airline or a travel agent will be a major obstacle for making frequent requests of price comparison or price updates on a periodical basis.

Furthermore, the long periodicity or frequency by which the positioning analysis is manually performed does not allow the price comparison to be accurate, which results in a lack of adaptability to the changes of the market and competition. The accuracy of the data and the reactivity to any change of the market and the competition are features which are useful for an improved Positioning Analysis. All the constraints explained above show that the manual Positioning Analysis has very limited possibilities as they are the sources of concern when the positioning analysis is performed by agents.

Therefore, the present invention proposes an automated and optimized method, apparatus and system for monitoring competition price, detecting price discrepancies, and for providing corrective messages or actions. With the present invention, a scalable and a frequently refreshed Positioning Analysis is possible with an extendable number of markets to be selected and monitored.

In the airline industry, Pricing is a complex activity since Prices can be influenced by factors that are available to the user such as a fare analyst. Those factors are numerous such as Coded Fares, Encoded Rules, as well as specified Routing or Mileage. For instance, the Encoded Rules has more than 40 Encoded Rules restrictions such as Category 1 Eligibility, Category 2 Day/Time, Category 3 Seasonality, etc. Each of these Encoded rules has numerous coding possibility offered to the airline, as well as several possible application levels such as Fare Component, Pricing Unit, Journeys etc.

Here are some examples of causes which are the source of Competitive Disadvantages:

Example 1 Fares: The using entity is offering a Public Fare as cheapest solution while the competition has negotiated a Private Fare.

Example 2 Encoded Rules: On Fridays, the negotiated private fare of the using entity is not applicable because Cat 02 Day/Time is failing. The cheapest public fare then is returned.

Example 3 Fees: The using entity applies a higher mark-up Fee than the Competitor

A manual intervention (human assessment) on each unitary analysis (city pair/stay level) would need expertise and some time to be executed (10 minutes at least in average) due to the complexity of the Pricing activity because of the volume of data to process in order to have an exhaustive view of the competition of all the markets/dates/stays. For example, in order to compare 10 Travel Vendors which includes one using entity and 9 competitors, on 50 000 Markets (100 Origins x 500 Destinations) and 100 departure dates and 30 stay durations, the number of detailed unitary analysis (city pair/stay level) to be performed is 1.5x10⁶. It would then require 2.5 x 10⁵ hours (156 men years) to complete the full analysis of the data, which is not sustainable.

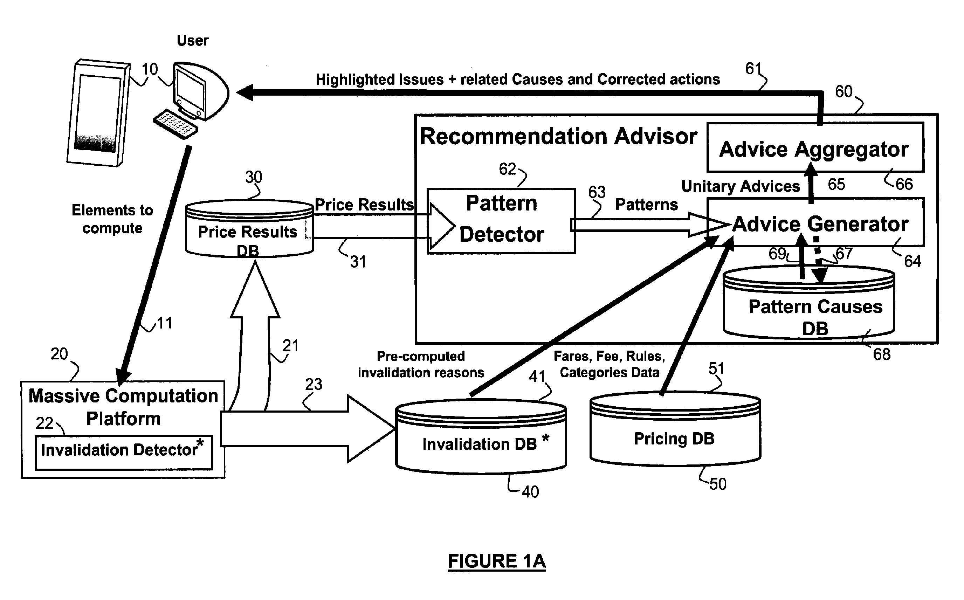

According to the present invention, an automated analysis is performed based on a number of recurrent Positioning Patterns (in average 10 positioning patterns by city pair/stay that is 1,5.10⁷ patterns). Furthermore, since the analysis is automated, the average time necessary for each positioning pattern analysis is reduced to 2.3 ms:
● 1 ms: 90% of the Positioning Patterns are explained thanks to the Pattern Cause Database referred as block 68 in Figure 1A;
● 10ms: 9% of the Positioning Patterns are explained thanks to the processing of all the MCP Pre-computed Invalidations of the MCP Database referred as block 40 in Figure 1A;
● 50 ms: 1% of the Positioning Patterns are explained thanks to the processing of all the PSP Data of the PSP Database base referred as block 50 in Figure 1A.

By implementing the present invention, for the whole analysis, the above mentioned 1.5 x 10⁷ Positioning Patterns to be analysed would use an overall time which can be estimated to one hour for 10 CPUs, which is operationally sustainable.

**Figure 1A** is an exemplary block diagram showing an architecture of a database system and data flows between the different databases. More specifically, it illustrates a processing of a request 11 received from a Customer 10 in the Global Distribution System GDS and the access to the different databases in order to provide corrective messages 61 back to User 10 wherein the corrective messages contain highlighted issues, related pattern causes and corrective actions that will be described in more details.

Request 11 of User 10 contain different elements that are selected among several choices, such as competitors, markets, advance purchase, date combination etc. These elements are then used in a Massive Computation Platform 20 to generate raw price results 21 which are then transmitted to a Price Results Database 30 and also to generate fare invalidation results 23 which are transmitted to an Invalidation Database 40. The price results may be used for several price discrepancy detection flows. The request 11 can be sent by user 10 to the platform 20 as depicted or via a recommendation advisor which will be described hereafter. The platform 20 contains an invalidation detector 22 which is used for detecting fare invalidations and stores them in the invalidation database 40. In the field of the travel and tourism industry, prices will generally concern travel recommendations that are bookable by customers.

According to the present invention, a Recommendation Advisor 60 is configured to analyse Price Results 31 provided by Price Result Database 30. The function of the Recommendation Advisor 60 is to detect the Competitive Disadvantages or Price Discrepancies and to return their related Pattern Causes and the Corrective Actions in the Corrective Messages 61 back to User 10.

Recommendation Advisor 60 accesses several existing databases such as the Price Result Database 30, the Invalidation Database 40, and a Pricing Database 50 whose functions and structures are as follows:
● Price Result Database 30: is a Database of Price Results 31 corresponding to the elements to be processed by the recommendation advisor 60 and which are selected by User 10 among several choices. This Price Result Database is updated by an MCP Process on the Massive Computation Platform 20 that computes the Price Results;
● Invalidation Database 40: is a Massive Computation Platform Database of the Invalidations corresponding to the elements to compute which are selected by User 10. This Invalidation Database is updated by the massive computation platform's Process so that it can be used later on by the recommendation advisor 60 by receiving pre-computed invalidation reasons or invalidation data 41; and
● Pricing Database 50: is a Pricing & Shopping Platform Database or a pricing database containing all PSP data or pricing data 51 that are used for the Pricing Processes. These pricing data 51 are for instance Fares, Rules, Categories, Fees, etc. which are accessed by the recommendation advisor 60.

Recommendation Advisor 60 is composed of 3 subcomponents: a Pattern Detector 62, an Advice Generator 64 and an Advice Aggregator 66, whose functions and structures are as follows:
● Pattern Detector 62: is a subcomponent that analyses the Price Results 31 provided by the price results DB 30 to detect Positioning Patterns 63;
● Advice Generator 64: is a subcomponent that determines the causes and corrective actions related to the detected Positioning Pattern and generates raw Advices also referred as Unitary Advices 65 based on customer request 11; and
● Advice Aggregator 66: is a subcomponent that transforms or aggregates the unitary advices 65 returned by the Advice Generator 64. These unitary advices 65 are used by advice aggregator 66 to find their highest level of applicability and to retrieve the highlighted issues and related Pattern Causes and Corrective Actions imbedded in Corrective Messages 61 back to User 10. Recommendation Advisor 60 also contains its own Database:
● Pattern Causes Database 68: is a Database containing previously determined causes and the corrective actions related to each Positioning Pattern 63, retrieved in a message 69 to Advice Generator 64. Please note that the 69 arrow represents the read action in the Pattern Causes Database 68 while the dashed 67 arrow represents the write/update action.

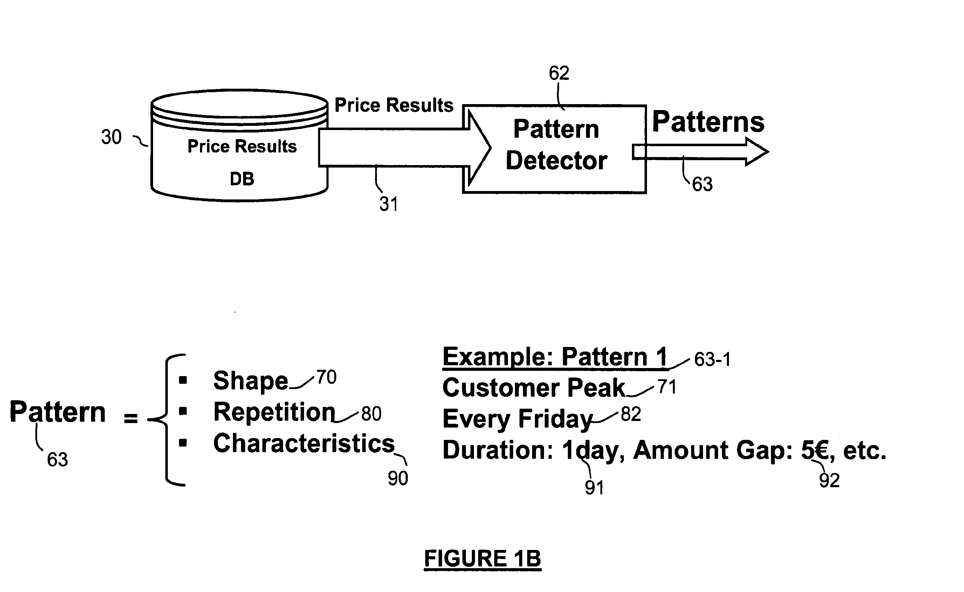

**Figure 1B** is an exemplary block diagram showing the data flows upstream the recommendation advisor 60 and more specifically the inputs and outputs of the pattern detector 62 according to the present invention.

Pattern Detector 62 analyses at the most specific level (wherein the city pair and stay are defined) Price Results 31 provided by Price Results Database 30 to detect all types of Positioning Patterns 63. A Positioning Pattern 63 may be defined by:
● a specific shape 70 of events appearing in the price results 31: which consists of a customer peak 71, a competitor peak 72, a customer plateau 73, or a competitor plateau 74, etc.;
● an indication of repetition 80 of the events: repetition every Friday 82, every week, month etc.); or
● a set of characteristics 90 of the events: which may comprise : an amount gap 92: for instance 5€, 35€, etc.; a duration 91: for instance one day, 2 weeks, 2 months, etc.; a Start date (not depicted): Friday January 1 rst; etc.

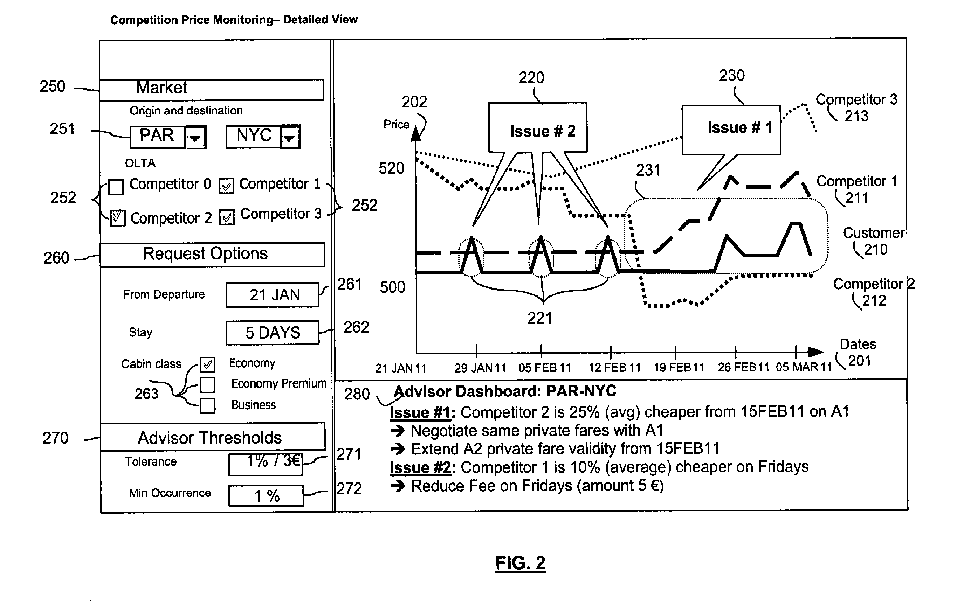

**Figure 2** shows an exemplary detailed view of the competition price monitoring for detecting price discrepancies shown on the Y-axis 202 at a city level between Paris and New York City during a time period between 21 January 2011 and 05 March 2011 shown on the X-axis dates 201.

For the competition price monitoring, User 10 may define different fields such as:
- a market 250;
- request options 260; and
- an advisor threshold 270.

Market 250 may be defined by an Origin and Destination 251 with a selected origin Paris and destination New York City in this example. The market may also be defined by a competition 252 by selecting for instance a plurality of Online Travel Agency OLTA which are competitor 1, competitor 2, ... , competitor N.

In the request options 260, User 10 may select:
- a date 261 for a departure date which is for instance 21 January 2011;
- a stay 262 expressed in term of duration which is for instance 5 days; and
- a cabin class 263 which are Economy, or Economy Premium or Business. Additional request options may be added and selected by User 10.

The advisor thresholds are defined for instance by:
- a tolerance 271 expressed in percentage and/or amount, and this example the tolerance percentage is 1% for an amount being at least of 3€; and
- a minimum frequency 272 expressed in percentage or amount, and this example the minimum frequency percentage is 1%.

In the exemplary illustration, User 10 selects three competitors which are: competitor 1, competitor 2 and competitor 3. Their respective graphs are respectively represented and referred as 210, 211, 212 and 213. More competitors may be selected by User 10 for this competition price monitoring and may be graphically represented in this detailed view. The set of price results used by the invention preferably reflects the evolution over time of the price of a given product or of comparable products as sold by several vendors (i.e. the selected competitors and the customer). Products here include services such as travel service reservations materialized by tickets (usually electronic tickets in today's travel and tourism industry). In such an application the using entity and the competitors may be online travel agencies acting as resellers of travel journeys operated by travel carriers.

Four associated graphs 210, 211, 212 and 213 show continuous curves which represent respectively their price variations over the time period between 21 January and 5 March 2011 of Using entity and the three competitors. Theses graphs raise 2 types of issues, issue #1 and issue #2 respectively referred as 230 and 220 where the customer price is above one of the prices of the selected competitors or the lowest price of the competition. The issues advantageously correspond to events for which the price of the customer for a given product is higher than the price of any of the monitored competitors for the same product or a similar product (like a travel journey sharing the same service level between the same Origin and destination, for the same dates). The events can be used as basis for detecting patterns. Events are indeed reflecting a pattern which is defined as a group of events sharing similarities. Only one event may be sufficient to identify a pattern but patterns are often made of a repetition of events. Examples of similarities used to group events into one pattern were previously given in reference to figure 1B. Events are often situations where the using entity is not in favourable competitive conditions, i.e. its prices are above the prices of at least one competitor. This is reflected by the events called "issues" hereafter detailed.

Issue #1 occurs approximately during the period between 12 February 2011 and 05 March 2011 where the prices of using entity are above the prices of competitor 2 but below competitors 1 and 3. In this example, competitor 2 is 25% in average cheaper from 15 Feb. 2011 on a particular airline A1.

Issue #2 occurs repetitively approximately on 28 January, 4 February, and 11 February 2011 where the prices of using entity are above the prices of competitor 1 but below competitors 2 and 3. Competitor 1 is 15% in average cheaper on Fridays.

These issues #1 and #2 are spotted on the graphs to give a greater visibility, and referred as 231 and 221. In this example, the repetition of issues, such as Issue #2, are spotted and are linked to each other on the graphs in order to give a better a corrective action to User 10 and to simplify the corrective message that needs to be taken by User 10.

According to this example, the detailed view shows the graphs with the detected 2 issues, and an Advisory Dashboard 280 listing Issue #1 and Issue #2 with the associated corrective actions. These corrective actions are extracted from the Pattern Causes Database 68. For Issue #1, the corrective actions are first to negotiate the same private fares with a detected airline A1, and second to extend a private fare validity from 15 Feb. 2011 with a detected airlines A2. For Issue #2, the corrective action is to reduce the Fee on Fridays by an amount of 5€.

All the corrective actions of the associated issues are listed in the Advisor Dashboard 280 as shown in figure 2 in the following format with a priority order:
Issue #1: Competitor 2 is 25% (average) cheaper from 15Feb11 on A1
   → Negotiate same private fares with A1
   → Extend A2 private fare validity from 15Feb11
Issue #2: Competitor 1 is 25% (average) cheaper on Fridays
   → Reduce Fee on Fridays (amount 5 €)

Additional detected issues and corrective actions can be listed in the priority order that they are retrieved from the Pattern Causes Database 68. If a positioning pattern cannot be found in the Pattern Causes Database 68, the database is updated with the positioning pattern and associated corrective actions.

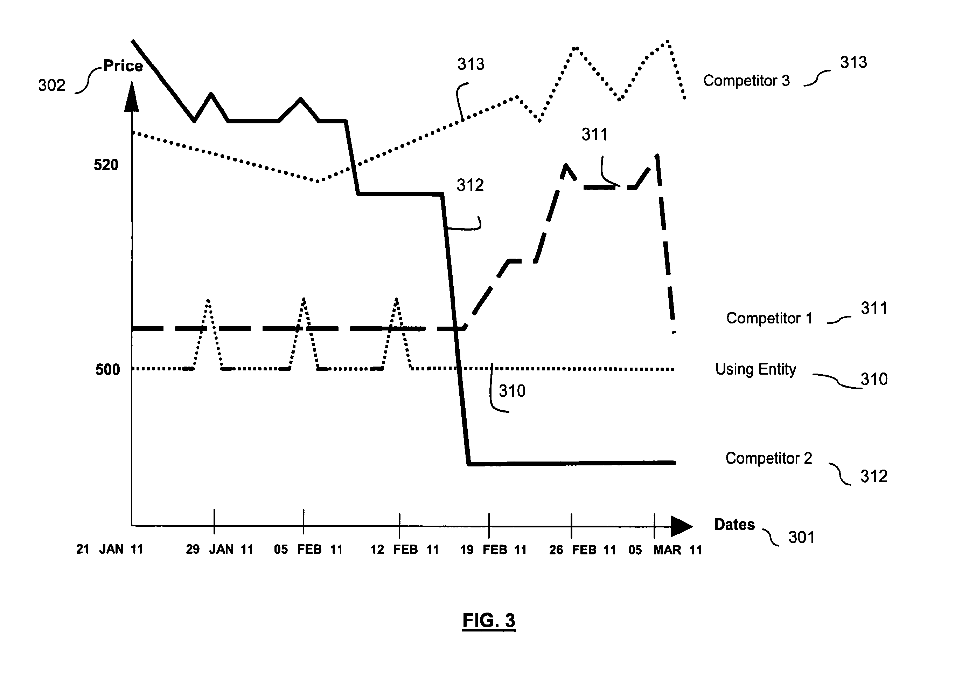

**Figure 3** is an example of continuous graphs showing a set of price results obtained from the parameters selected by the user according to the present invention.

These continuous graphs 310, 311, 312 and 313 represent the price variation of the price results 31 of user 10 and three competitors over the period of time between 21 January and 5 March 2011. They are extracted from the detailed view of the competition price monitoring of figure 2 where the dates are on the X-axis 301 and the prices in Y-axis 302. The competitors are selected by user 10 at a level that is the most specific level (city pair and stay).

The price results 31 are generated based on the Customer request 11 computed in the massive computation platform 20. They are used as inputs in the Pattern Detector 62 which filters and analyses the price results by segmenting the continuous graphs 310, 311, 312 and 313 in order to detect any positioning patterns 63 which are then transmitted to the Advice Generator 64 as is shown in the next figure.

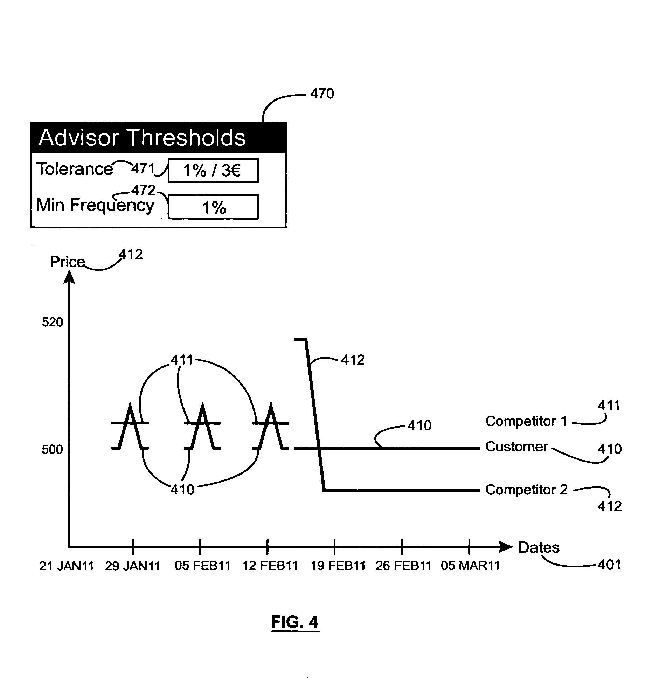

**Figure 4** is an example of segmented graphs showing a set of price results filtered by the pattern detector according to a pattern detector process of the present invention.

The price results are used for drawing the price variation on the Y-axis 402 during a period of time selected by User 10 on the X-axis 401 and based on the Advisor Thresholds inputs 470 defined by an amount tolerance 471 and a minimum frequency 472.

The first step of the Pattern Detector process is to filter out all Price Results that are not linked to any competitive disadvantages. It consists of detecting all the configurations in which the customer's price is above the lowest price and keeping the lowest competitor, based on the Advisor Thresholds inputs 470 defining an amount tolerance of 1% and 3€ and a minimum frequency of 1%.

In this example, a first group of 3 segmented graphs 410 and 412 are alike and a second group of segmented graphs 410 and 411 which are different from the first group.

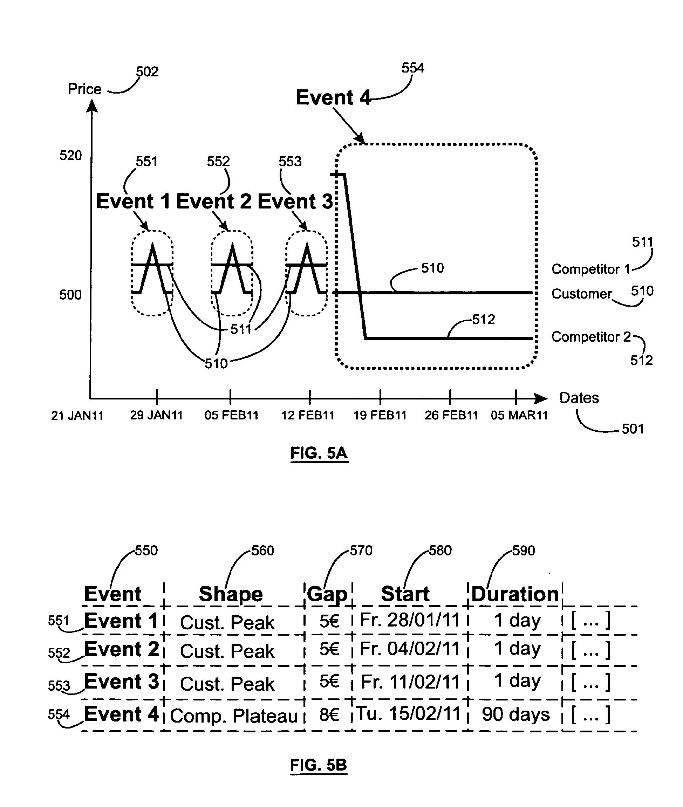

**Figure 5A** is an example of segmented graphs showing a set of price results associated with events detected by the pattern detector according to the present invention. The price results of the customer and the selected competitors are used for drawing the price variation 502 during a period of time 501 selected by User 10.

This step of the Pattern Detector process is to determine some events and their related characteristics. The Events are the remaining continuous portions that have not been filtered out during the first step. Each Event is separated from each other. The characteristics to be determined for each event are predetermined attributes such as the Duration, the Start date, the Gap amount, etc.

In this example, the first group of segmented graphs represents Event #1, Event #2, and Event #3 respectively referred as 551, 552, and 553. In these three Events, segmented graph 510 of User 10 has a customer peak above segmented graph 511 of competitor 1 but is below segmented graph 511 of competitor 1 outside the peak. The second group of segmented graphs represents Event #4 referred as 554. In Event #4, segmented graph 510 of User 10 is above segmented graph 512 of competitor 2 on a competitor plateau.

**Figure 5B** is an example of table showing the list of Events 550 which are Events #1 to # 4 and their related characteristics which are associated to the set of price results used by the pattern detector to detect the positioning patterns according to the present invention.

The characteristics of each event are predetermined attributes such as a Duration 590, a Start date 580, a Gap amount 570, a Shape 560, etc.

In this example, Event #1, Event #2, Event #3 and Event #4 have the characteristics given in figure 5A.

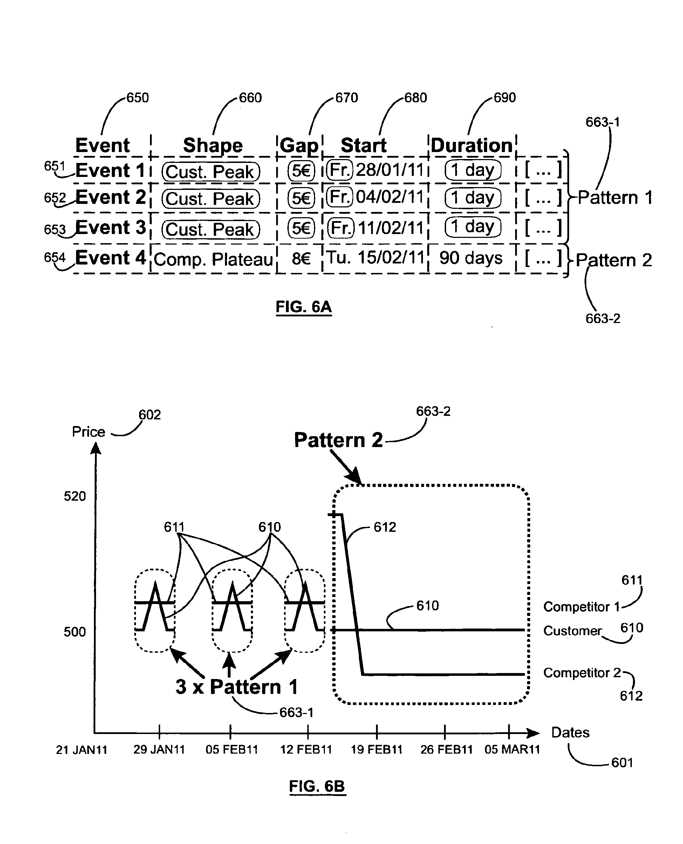

**Figure 6A** is an example of table showing the grouping of similar events with their related characteristics into different positioning patterns according to the present invention.

This step of the Pattern Detector process is to detect similarities or common characteristics such as Shape 660, Gap 670, Start date 680, and Duration 690 between events 650. When the number of similarities is above a predetermined threshold, all the related events are grouped together and considered as several instances (repetitions) of a specific positioning pattern 663-1. During this step, if an event is not linked to any other event, this event is considered as a Positioning Pattern on its own (a single instance only, no repetition) 663-2.

In this example, Events #1, #2 and #3 respectively referred as 651, 652 and 653 are grouped together as Pattern #1, whereas Event #4 referred as 654 is not linked to any other event and is labelled Pattern #2.

**Figure 6B** is a graphical illustration of the table showing the grouping of similar events and their positioning patterns with their shapes and repetitions according to the present invention.

Based on the time period 601 selected by User 10, the Customer price variations 610 and the selected Competitors price variations 611 and 612 are graphically illustrated to show more evidently the positioning patterns 663-1 and 663-2. In this example, Pattern #1 is repeated three times whereas Pattern #2 has no repetition. The prices on the Y-axis enable to detect the gap 670 of the different Events and Patterns. The Duration 690 can be also visualised on the X-axis in order to improve the price comparison.

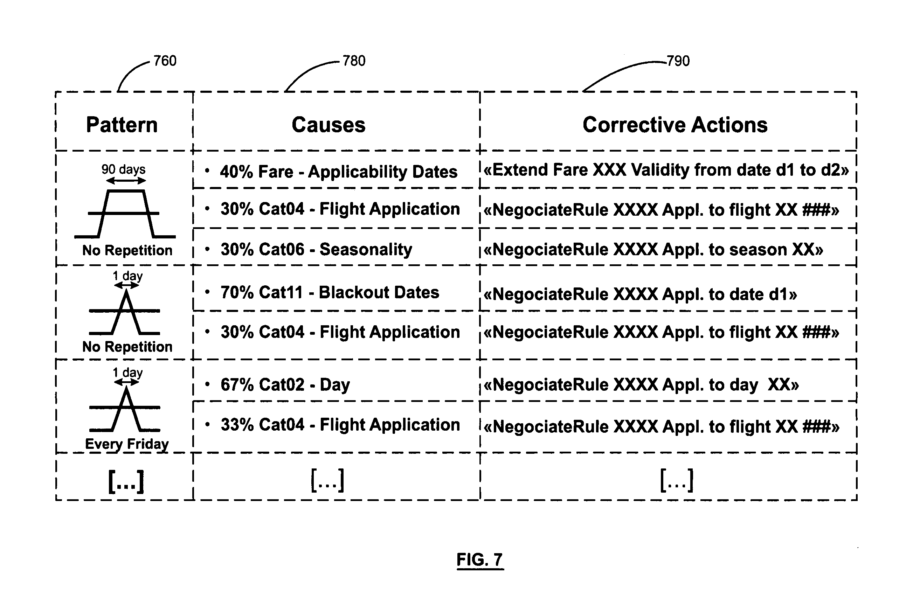

**Figure 7** shows an example of table associating detected positioning patterns to potential causes and corrective actions stored in the pattern causes database.

The Pattern Causes Database 68 is a Database that is associating a Positioning Pattern 760 with its shape, repetition and characteristics to Pattern Causes 780 and related Corrective Actions 790, these latter being also referred as 'Advices'. Each pattern Cause has a relative weight for a specified Positioning Pattern. A Positioning Pattern may have several pattern Causes. For each Positioning Pattern and pattern Causes association (760, 780), one or several Corrective Actions 790 are associated. A Corrective Message or Corrective Action is a template of text message that matches a Pattern Cause.

The Pattern Causes Database 68 is used / accessed by the Advice Generator 64 to retrieve Unitary Advices 65 and it is also periodically updated by the Advice Generator 64 to add Positioning Patterns with new associated shapes, repetitions and characteristics and new pattern Causes and new related Corrective Actions.

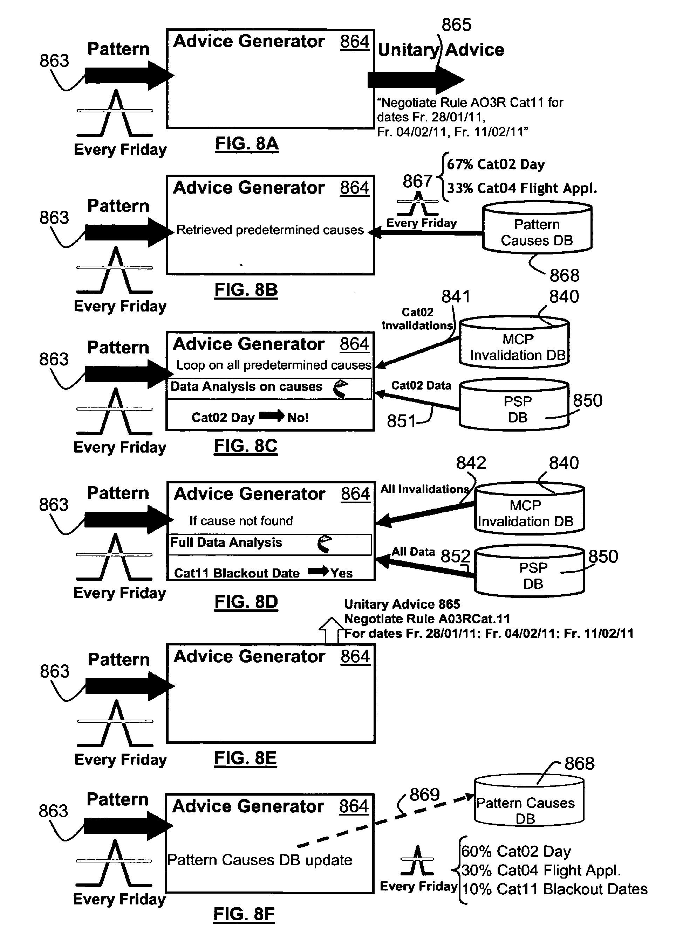

**Figure 8A** is an example of block diagram showing the data inputs and outputs of the advice generator. And more specifically, it shows the positioning pattern inputs and unitary advice outputs of the advice generator according to the present invention.

Advice Generator 64 of figure 1A is referred in this figure 8A as 864 and is a subcomponent that analyses a Positioning Pattern 863 and determines the related pattern Causes and corrective Actions to remedy, reduce or remove the price discrepancies. Advice Generator 864 consolidates the related pattern Causes and corrective Actions in a unitary Advice 865 that is generated in this example with the corrective action: "Negotiate Rule AO3R Cat11 for dates Fr.28/01/11, Fr.04/02/11, Fr.11/02/11". The Pattern Causes and Corrective Actions are applied at the most specific level where the city pair and stay are defined.

**Figure 8B** shows the first step of retrieving the predetermined causes performed by the Advice Generator 864 by accessing the Pattern Causes Database 868 according the present invention.

This step retrieves all predetermined Causes 867 related to current Positioning Pattern 863 from the Pattern Causes Database 868.

One of the predetermined Causes 867 is:

| | |
|---|---|
| "Every Friday, | 67% Cat02 Day, |
| | 33% Cat04 Flight Appl.". |

**Figure 8C** shows the step of carrying out a data analysis of the detected causes performed by the Advice Generator 864 by accessing the Invalidation and the Pricing Databases 840, 850 based on the detected positioning pattern 863.

This step performs a Data Analysis on each predetermined pattern Cause. The predetermined causes are processed by priority order. As soon as a Cause is identified, this step stops. The Data Analysis is performed thanks to the invalidation data 841 retrieved from the Invalidation Database 840 and that have been stored during the massive computation processing and thanks to the pricing data 851 (Fares, Rules, Categories, Fees, etc.) retrieved from the Pricing Database 850. To limit access to the Pricing Database 850 and the processing of the Pricing Data, the invalidations 841 are checked first. In case the Cause is identified, this step stops. The identified pattern Cause and the related corrective Actions, also referred as Advices, are extracted from the Invalidation database 840 and Database 850 and are then returned to user 10.

**Figure 8D** shows the step of carrying out a full data analysis performed by the advice generator by accessing the Invalidation and the Pricing Databases 840, 850 based on the detected positioning pattern 863.

This step is optional. It is only processed when none of the predetermined causes retrieved from the Pattern Causes Database 868 to explain the current Positioning Pattern 863 have been validated during the previous step. In this case, based on the Positioning Pattern 863 received in the Advice Generator 864, a Full Data Analysis is therein performed. First, all the Invalidation Data 842 on related Price Results are retrieved from the Invalidation Database 840. All existing invalidation reasons are then parsed. If the invalidation reason is found then this step stops. In case no invalidation reason is found yet, all Pricing data 852 related to the Price Results are retrieved from the Pricing Database 850. Each Data is then processed until a pattern cause is found. Once the pattern cause is retrieved, the cause and the related corrective Actions are extracted from the Invalidation and the Pricing Databases 840, 850 and are then returned.

A further step of the method is shown in **Figure 8E****.** In this step, the Advice Generator 864 consolidates the related pattern Causes and corrective Actions in a unitary Advice 865 that is returned with the corrective action "Negotiate Rule AO3R Cat11 for dates Fr.28/01/11, Fr.04/02/11, Fr.11/02/11 ".

**Figure 8F** shows the step of updating a pattern causes performed by the Advice Generator 864 by accessing the Pattern Causes Database 868 based on the detected Positioning Pattern 863.

This step consists of updating the Pattern Causes Database 868 with the Cause that has not been found for the current Positioning Pattern 863. Any new positioning pattern cause is added to the Patent Causes Database 868. And the frequencies of the positioning pattern causes are also updated 869. For instance, in the example, the update message 869 specifies that the positioning pattern at issue has a frequency of "every Friday, 60% Cat02 Day, 30%Cat04 Flight Appl. and 10% Cat11 Blackout Dates".

In an preferred embodiment the update step is performed even though no new causes have to be processed: each pattern detection gives the system the opportunity to re-calculate the frequency of occurrence of each pattern stored in the database 868. This may modify the priority orders of the pattern causes for the next pattern detection.

In one preferred embodiment of the invention, the Pattern Causes Databases 868 is not only kept up-to-date and enriched with the above process but also created the same way: at the invention's implementation time, the Pattern Causes Databases 868 is empty but it is rapidly filled with every pattern cause met during the process of the invention. In this case no separate construction method is needed for the Pattern Causes Databases 868.

The invention's process can be repeated for plural origin/destination pairs so as to cover broader geographical regions. The advice can be provided independently for each origin/destination pair or a more global view can be generated as explained hereafter.

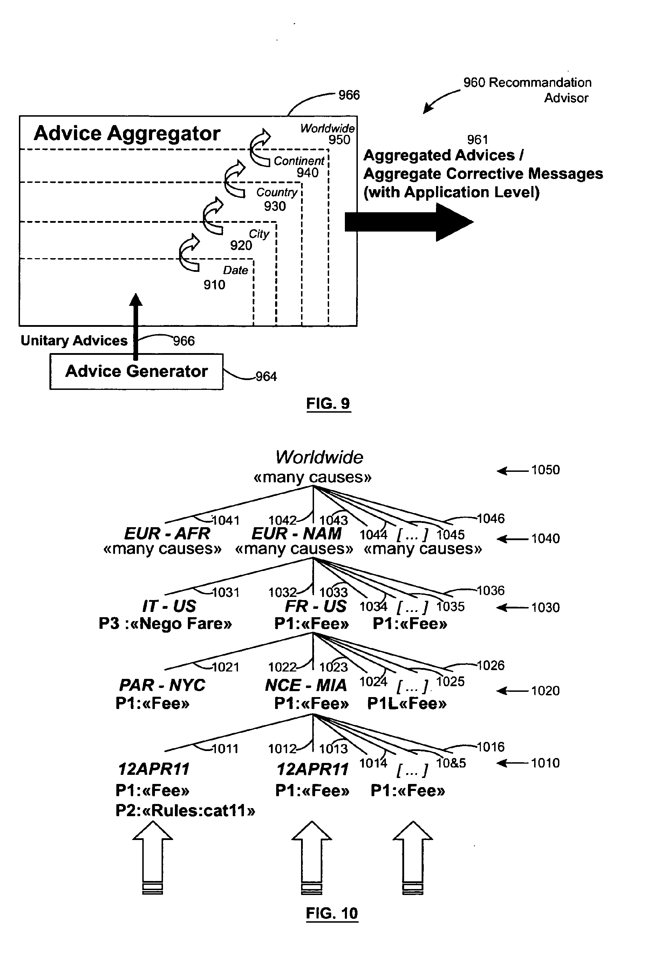

**Figure 9** shows an example of advice aggregator receiving corrective actions, also referred as unitary advices 965, from Advice Generator 964 and generating aggregated corrective messages, also referred as aggregated advices 961.

Advice Aggregator 966 is a subcomponent of Recommendation Advisor 960 that aggregates the unitary causes and correction messages or actions returned by the Advice Generator 964 at city pair/stay level to find their highest level of applicability. The possible application level goes from the lowest to the highest level: the date level 910, the city pair level 920, the country level 930, the continent level 940 and the worldwide level 950. If there is no possible aggregation, the city pair/stay level is then selected by default. Each of these levels corresponds to a possible display in the Competition Price Monitoring application.

**Figure 10** shows an example of cause aggregation at different levels from the lowest level to the highest possible level that is from date level 1010 to worldwide level 1050.

In this example, some positioning patterns are detected and the associated causes also found in the Pattern Cause Database and returned by the Advice Generator. The unitary advices contain pattern causes that are to be aggregated by the Advice Generator.

At the date level 1010, based on the several pattern causes found, the Advice Aggregator 966 detects and aggregates similar Pattern Causes:

On a first branch 1011, 12 Apr11, P1: "Fee" and P2:"Rules:cat11"

On a second branch 1012, 12 Apr11, P1: "Fee"

On a third branch 1013, ....., P1: "Fee"

On other branches 1014, ..., P1: "Fee"

Since Pattern Cause P1 appears a common Pattern Cause for several branches, they are aggregated under the same common city pair with the same pattern cause P1. In this particular case, the city pair is NCE-MIA.

At the city level 1020, based on the several pattern causes found, the Advice Aggregator 966 detects and aggregates similar Pattern Causes:

On a first branch 1021, PAR-NYC, P1: "Fee"

On a second branch 1022, NCE-MIA, P1: "Fee"

On a third branch 1023, ......... , P1: "Fee"

On other branches 1014, ....... , P1: "Fee"

Since Pattern Cause P1 appears a common Pattern Cause for several branches, they are aggregated under the same common country pair with the same pattern cause P1. In this particular case, the country pair is FR-US.

At the city level 1030, based on the several pattern causes found, the Advice Aggregator 966 detects and aggregates similar Pattern Causes:

On a first branch 1031, IT-US, P3: "Nego Fare"

On a second branch 1032, FR-US, P1: "Fee"

On a third branch 1033, ......., P1: "Fee"

On other branches 1034, ....., P1: "Fee"

Since Pattern Cause P1 does not appear to be a common Pattern Cause for several branches, they are aggregated under the same common continent pair but with the label "many causes" and not the same pattern cause. In this particular case, the continent pair is EUR-NAM.

At the continent level 1040, the Advice Aggregator 966 aggregates with the same "many causes".

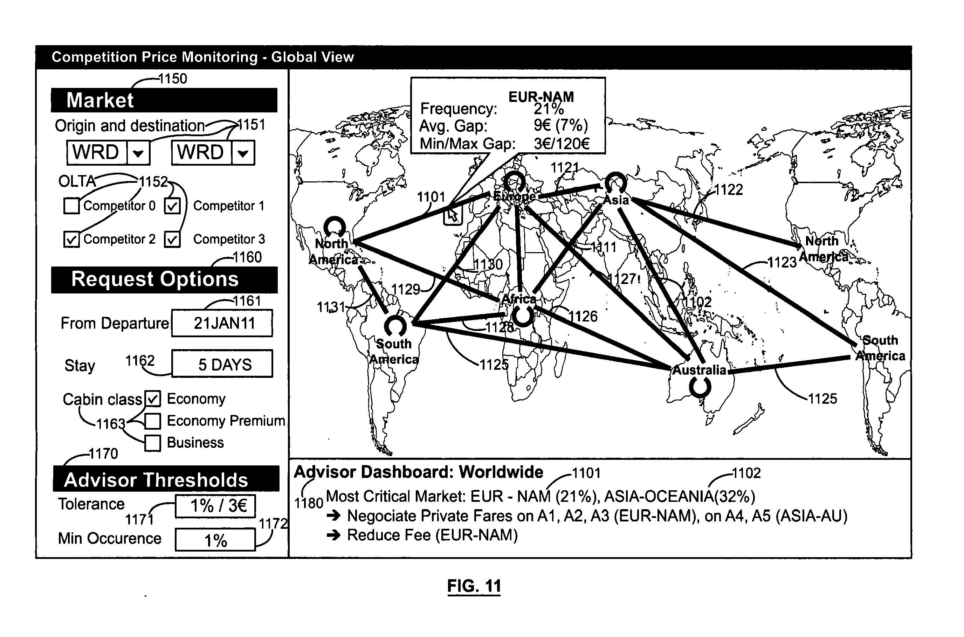

**Figure 11** shows an example of global view of the competition price monitoring according to the present invention detecting price discrepancies at a worldwide level.

This figure is an exemplary view that can appear on a user interface based on inputs provided by User 10 such as:
- a market 1150;
- request options 1160; and
- an advisor thresholds 1170.

The market may be defined by an Origin and Destination 1151 with a selected origin World and destination World in this example. The market may also be defined by a competition 1152 by selecting for instance a plurality of Online Travel Agency OLTA which are competitor 1, competitor 2, ... , competitor N.

In the request options 1160, User 10 may select:
- a date 1161 for a departure date which is for instance 21 January 2011;
- a stay 1162 expressed in term of duration which is for instance 5 days; and
- a cabin class 1163 which are Economy, or Economy Premium or Business. Additional request options may be added and selected by User 10.

The advisor thresholds are defined for instance by:
- a tolerance 1171 expressed in percentage or amount, and this example the tolerance percentage is 1 % for an amount of 3€; and
- a minimum frequency 1172 expressed in percentage or amount, and this example the minimum frequency percentage is 1%.

In the exemplary illustration, three competitors selected by User 10 are competitor 1, competitor 2 and competitor 3. The competition price analysis is performed on 6 continents: North America NAM, South America SAM, Europe EUR, Asia, Africa and AU or Oceania.

Different lines are linking continents and referred as EUR-NAM 1101, Asia-Oceania 1102, Africa-Asia 1111, EU-Asia 1121, Asia-NAM 1122, Asia-SAM 1123, Oceania-SAM 1125, Africa-Oceania 1126, EUR-Oceania 1127, Africa-SAM 1128, Africa-NAM 1129, EUR-SAM 1130, and NAM-SAM 1131. These lines enable User 10 to visualise the price discrepancies over the time period between 21 January and 5 March 2011. The most critical markets (i.e. the most important markets from the using entity's standpoint) are highlighted in red for instance to attract the visual attention of User 10 and concern EUR-NAM 1101 with a frequency of 21%, and Asia-Oceania 1102 with a frequency of 32%.

For EUR-NAM:
- Frequency: 21% which is too high (frequency over time)
- Average Gap: 9€ or 7%; and
- Minimum and Maximum Gap: 3€ and 120€

At the same time, on the Advisor Dashboard 1180, a list of causes and corrective actions are displayed in this global view at the worldwide level. In this example, two causes are detected and spotted which are referred as the most critical market: EUR-NAM 1101 with a frequency of 21%, and Asia-Oceania 1102 with a frequency of 32%. The corrective actions indicate:
→ Negotiate Private Fares on A1, A2, A3 (EUR-NAM), on A4, A5 (Asia-AU)
→ Reduce Fee (EUR-NAM)

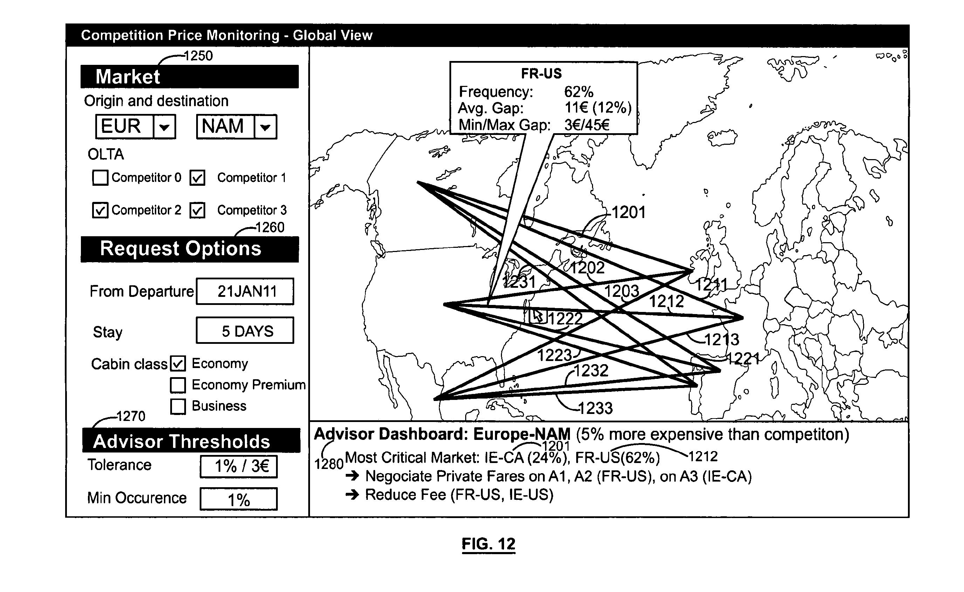

**Figure 12** shows an example of global view of the competition price monitoring according to the present invention detecting price discrepancies at a continent level between Europe and North America.

This figure is an exemplary view that can appear on a user interface based on inputs provided by User 10 such as:
- a market 1250;
- request options 1260; and
- an advisor thresholds 1270.

The market may be defined by an Origin and Destination 1151 with a selected origin EUR and destination NAM in this example.

As in the previous case, the advisor thresholds are defined by:
- a tolerance 1271 expressed in percentage or amount, and this example the tolerance percentage is 1 % for an amount of 3€; and
- a minimum frequency 1272 expressed in percentage or amount, and this example the minimum frequency percentage is 1%.

As in the previous case, three competitors selected by User 10 are competitors 1, 2 and 3. The competition price analysis is performed between 2 continents: North America NAM, Europe EUR.

Different lines are linking countries of these 2 continents and referred as IE-CA 1201, IE-US 1202, IE-MX 1203, FR-CA 1211, FR-US 1212, FR-MX 1213, ES-CA 1221, ES-US 1222, ES-MX 1223, PT-CA 1231, PT-US 1232, and PT-MX 1233. These lines enable User 10 to visualise the price discrepancies and more particularly the most critical markets over the time period between 21 January and 5 March 2011. The most critical markets are highlighted in red and concern: IE-CA 1201 with a frequency of 24%, and FR-US 1212 with a frequency of 62%.

For FR-US 1212:
- Frequency: 62% which is too high
- Average Gap: 11€ or 12%; and
- Minimum and Maximum Gap: 3€ and 45€

At the same time, on the Advisor Dashboard 1280, a list of causes and corrective actions are displayed in this global view at a continent level. In this example, two causes are detected and spotted for the most critical markets: IE-CA 1201 with a frequency of 24%, and FR-US 1212 with a frequency of 62%.

The corrective actions indicate:
→ Negotiate Private Fares on A1, A2 (FR-US), on A3 (IE-CA)
→ Reduce Fee (FR-US, IE-US)

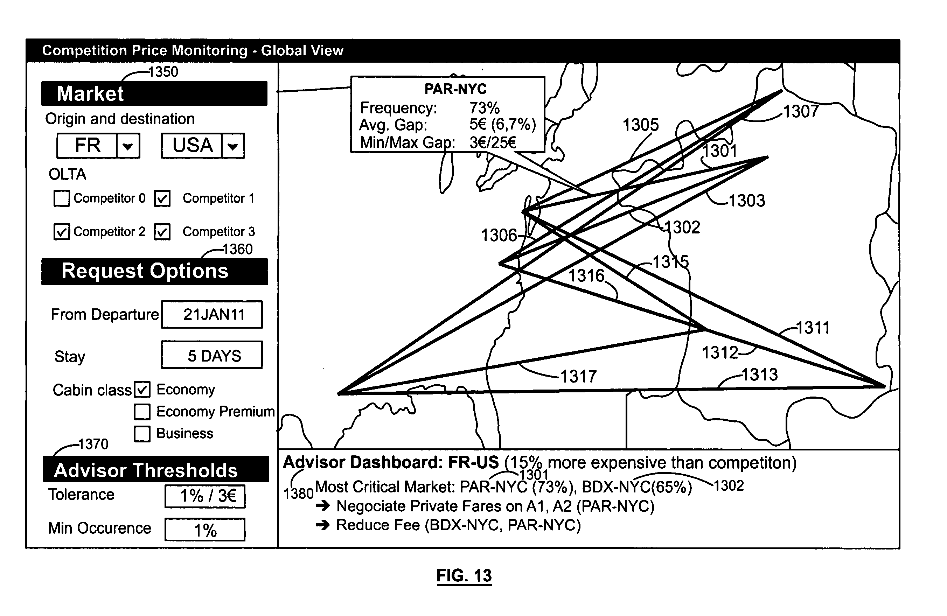

**Figure 13** shows an example of global view of the competition price monitoring according to the present invention detecting price discrepancies at a country level.

This figure is also an exemplary view that can appear on a user interface based on inputs provided by User 10 such as:

The market 1350 may be defined by an Origin and Destination 1351 with a selected origin FR and destination USA in this example.

As in the previous case, the advisor thresholds are defined by:
- a tolerance 1371 expressed in percentage or amount, and this example the tolerance percentage is 1% for an amount of 3€; and
- a minimum frequency 1372 expressed in percentage or amount, and this example the minimum frequency percentage is 1%.

As in the previous case, three competitors selected by User 10 are competitors 1, 2 and 3. The competition price analysis is performed between 2 countries: USA and FR.

Different lines are linking cities of these countries and referred as Paris-NYC 1301, Paris-DC 1302, Paris-Houston 1303, Lille-NYC 1305, Lille-DC 1306, Lille-Houston 1307, Nice-NYC 1311, Nice-DC 1312, Nice-Houston 1313, Bordeaux-NYC 1315, Bordeaux-DC 1316, and Bordeaux-Houston 1317. These lines enable User 10 to visualise the price discrepancies and more particularly the most critical markets. The most critical markets are highlighted in red and concern: PAR-NYC 1301 with a frequency of 73%, and Bordeaux-NYC 1315 with a frequency of 65%.

For PAR-NYC 1301:
- Frequency: 73% which is too high
- Average Gap: 5€ or 6.7%; and
- Minimum and Maximum Gap: 3€ and 25€

At the same time, on the Advisor Dashboard 1380, a list of causes and corrective actions are displayed in this global view at a country level. In this example, the causes are detected and spotted for the most critical markets: PAR-NYC 1301 with a frequency of 73%, and BDX-NYC 1315 with a frequency of 65%.

The corrective actions indicate:
→ Negotiate Private Fares on A1, A2(PAR-NYC)
→ Reduce Fee (BDX-NYC, PAR-NYC)

Exemplary embodiments of the invention are summarized hereafter; they can each be used independently or in combination with at least another exemplary embodiment of the invention:

In an exemplary embodiment, the computer-implemented method according to the present invention comprises receiving a request from a user containing the at least one parameter selected from a set of parameters.

In another exemplary embodiment, the set of price results is for travel recomendations wherein the set of parameters comprises a market selection of a destination and an origin and a set of at least one competitor, and a request selection of a departure date and a stay.

In another exemplary embodiment, the detecting of the pattern (63) comprises:
- filtering out price results for time periods where price results of a using entity are above lowest prices results of at least one competitor of the set of competitors;
- detecting at least one event in the filtered price results; and
- identifying the at least one pattern as a group of at least one detected event matching similarities associated with the at least one pattern.

In another exemplary embodiment the similarities are defined at least by one among a shape; a repetition; or a set of characteristics.

In another exemplary embodiment the shape is defined at least by one among: a using entity peak; a competitor peak; a using entity plateau; or a competitor plateau.

In another exemplary embodiment, the repetition is one among: event not detected; or event detected with a repetition.

In another exemplary embodiment, the set of characteristics is defined at least by one among: a duration; an amount gap; or a start date.

In another exemplary embodiment, the set of parameters comprises a threshold selection of a tolerance and/or a minimum frequency and wherein the amount gap is one of the threshold selections with a minimum gap.

In another exemplary embodiment the computer-implemented method further comprises:
- identifying plural predetermined pattern causes related to the pattern;
- analyzing the predetermined pattern causes by priority order, further comprising:
   performing an invalidation control with an invalidation database; and
   performing a pricing validation control with a pricing database,
- stopping analyzing upon detection of a predetermined cause providing an invalidation control result and a pricing control result that match the pattern in the conditions of the set of price results; and
- using the detected predetermined cause within the analysis message.

In another exemplary embodiment, the computer-implemented method further comprises displaying continuous graphs of the set of price results of the using entity and the competitors showing a detailed view of the detected patterns.

In another exemplary embodiment, the computer-implemented method further comprises displaying segmented graphs of the set of price results of the using entity and the competitors showing a detailed view of the detected patterns with the grouping of the detected events with the same pattern similarities.

In another exemplary embodiment, the computer-implemented method further comprises repeating the detecting of at least one another pattern, possibly for at least another set of price results based on at least one another set of parameters, and aggregating corrective messages by detecting and aggregating similar Pattern Causes.

In another exemplary embodiment, the computer-implemented method further comprises:
when no predetermined pattern provides an invalidation control result and a pricing control result that match the pattern, performing a full data analysis in the invalidation database and optionally in the pricing database and determining a new pattern cause;
updating the pattern causes database comprising adding the new pattern cause to the predetermined pattern causes and updating the associated corrective actions; and,
re-calculating the priority order of the predetermined pattern causes..

In another exemplary embodiment, the computer-implemented method further comprises generating alerts based on thresholds selection when the thresholds are exceeded.

In an embodiment, the apparatus according to the present invention has a set of price results which is for travel tickets (travel recommendations) and wherein the set of parameters comprises:
- a market selection of a destination and an origin and a set of competitors, and
- a request selection of a departure date and a stay.

In another embodiment, the pattern detector for detecting a pattern is further configured to:
- filter out price results for time periods where price results of an using entity are above lowest prices results of any competitor of the set of competitors preferably while taking into account a user-defined tolerance (price results of the using entity are filtered out when above tolerated values each obtained form an application of a tolerance value to the lowest price results of any competitor of the set of at least one competitor); and
- detect at least one event in the filtered price results; and
- identify the at least one pattern as a group of at least one detected event matching similarities associated to the at least one pattern.

In another embodiment, the similarities associated to the detected pattern are defined at least by one among a shape; a repetition; or a set of characteristics.

In another embodiment, the shape of the detected pattern is defined at least by one among: a using entity peak; a competitor peak; a using entity plateau; or a competitor plateau.

In another embodiment, the repetition of the detected pattern is not detected; or detected with a repetition.

In another embodiment, the set of characteristics of the events for the detected pattern is defined at least by one among a duration; an amount gap; or a start date.

In another embodiment, the advice generator is further configured to:
- identify plural predetermined pattern causes related to the pattern;
- analyze the predetermined pattern causes by priority order, wherein the advice generator is further configured to:
   perform an invalidation control with an invalidation database; and
   perform a pricing validation control with a pricing database;
- stop analyzing upon detection of a predetermined cause providing an invalidation control result and a pricing control result that match the pattern in the conditions of the set of price results; and
- use the detected predetermined cause within the analysis message.

In another embodiment, the apparatus displays continuous graphs of the set of price results of the using entity and the competitors showing a detailed view of the detected patterns.

In another embodiment, the apparatus displays segmented graphs of the set of price results of the using entity and the competitors showing a detailed view of the detected patterns with the grouping of the detected patterns with the same pattern similarities.

In another embodiment, the apparatus comprises an advice aggregator for aggregating analysis messages by detecting and aggregating similar Pattern Causes.

In another embodiment, the aggregated analysis messages are generated with priority order.

In another embodiment, the advice aggregator generates alerts based on thresholds selection when the thresholds are exceeded.

The foregoing description has provided by way of exemplary and non-limiting examples a full and informative description of various method, apparatus and computer program software for implementing the exemplary embodiments of this invention. However, various modifications and adaptations may become apparent to those skilled in the relevant arts in view of the foregoing description, when read in conjunction with the accompanying drawings and the appended claims. As but some examples, the use of other similar or equivalent processes or algorithms and data representations may be attempted by those skilled in the art. Further, the various names used for the different elements, functions and algorithms (e.g., , etc.) are merely descriptive and are not intended to be read in a limiting sense, as these various elements, functions and algorithms can be referred to by any suitable names. All such and similar modifications of the teachings of this invention will still fall within the scope of the embodiments of this invention.

Furthermore, while described above primarily in the context of travel solutions provided by airlines (air carriers), those skilled in the art should appreciate that the embodiments of this invention are not limited for use only with airlines, but could be adapted as well for use with other types of travel modalities and travel providers including, as non-limiting examples, providers of travel by ship, train, motorcar, bus and travel products such as hotels.

Furthermore, some of the features of the exemplary embodiments of the present invention may be used to advantage without the corresponding use of other features. As such, the foregoing description should be considered as merely illustrative of the principles, teachings and embodiments of this invention, and not in limitation thereof.

Embodiments of the various techniques described herein may be implemented in digital electronic circuitry, or in computer hardware, firmware, software, or in combinations of them. Embodiments may be implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program, such as the computer program(s) described above, can be written in any form of programming language, including compiled or interpreted languages, and can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks.

Embodiments may be implemented in a computing system that includes a back-end component, e.g., as a data server, or that includes a middleware component, e.g., an application server, or that includes a front-end component, e.g., a client computer having a graphical user interface or a Web browser through which a user can interact with an implementation, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

While certain features of the described implementations have been illustrated as described herein, many modifications, substitutions, changes and equivalents will now occur to those skilled in the art. It is, therefore, to be understood that the appended claims are intended to cover all such modifications and changes as fall within the true spirit and the scope of the embodiments of the invention.

## Claims

1. A computer-implemented method of detecting price discrepancies over time and providing analysis messages comprising:
- retrieving a set of price results based on at least one parameter selected from a set of parameters;
- detecting at least one pattern in the set of price results;
- accessing a pattern cause database for identifying at least one predetermined pattern cause based on the at least one pattern;
- analyzing each predetermined pattern cause and associated corrective actions; and
- generating at least one analysis message containing:
- the at least predetermined pattern cause; and
- the associated corrective actions.

2. The computer-implemented method of claim 1 comprising receiving a request from an user containing the at least one parameter selected from a set of parameters.

3. The computer-implemented method of claim 2 wherein the set of price results is for travel recommendations and the set of parameters comprises:
- a market selection of a destination and an origin and a set of at least one competitor, and
- a request selection of a departure date and a stay.

4. The computer-implemented method of claim 3 wherein the detecting of the at least one pattern comprises:
- filtering out price results for time periods where price results of an using entity are above lowest prices results of any competitor of the set of at least one competitor or above tolerated values each obtained form an application of a tolerance value to the lowest price results of any competitor of the set of at least one competitor;
- detecting at least one event in the filtered price results; and
- identifying the at least one pattern as a group of at least one detected event matching similarities associated to the at least one pattern.

5. The computer-implemented method of any claims 1 to 4 wherein the similarities comprise at least one among:
- a shape;
- a repetition; or
- a set of characteristics.

6. The computer-implemented method of claim 5 wherein the shape is defined at least by one among:
- an using entity peak;
- a competitor peak ;
- an using entity plateau; or
- a competitor plateau.

7. The computer-implemented method of claims 5 or 6 wherein the repetition is one among:
- event not detected; or
- event detected with a repetition.

8. The computer-implemented method of any claims 5 to 7 wherein the set of characteristics is defined at least by one among:
- a duration;
- an amount gap; or
- a start date.

9. The computer-implemented method of claim 8 wherein the set of parameters comprises a threshold selection of a tolerance and/or a minimum frequency and wherein the amount gap is one of the threshold selections with a minimum gap.

10. The computer-implemented method of any of claims 1 to 9 further comprising:
- identifying plural predetermined pattern causes related to the pattern;
- analyzing the predetermined pattern causes by priority order, further comprising:
performing an invalidation control with an invalidation database; and
performing a pricing validation control with a pricing database,
- stopping analyzing upon detection of a predetermined cause providing an invalidation control result and a pricing control result that match the pattern in the conditions of the set of price results; and
- using the detected predetermined cause within the analysis message; and
- re-calculating the priority order of the predetermined pattern causes.

11. The computer-implemented method of claim 3 further comprising:
- displaying continuous graphs of the set of price results of the using entity and the competitors showing a detailed view of the detected patterns.

12. The computer-implemented method of claim 4 further comprising:
- displaying segmented graphs of the set of price results of the using entity and the competitors showing a detailed view of the detected patterns with the grouping of the events with the same similarities.

13. The computer-implemented method of any preceding claims further comprising:
- repeating the detecting for at least one another pattern;
- aggregating corrective messages by detecting and aggregating similar Pattern Causes.

14. An apparatus for detecting price discrepancies over time and providing analysis messages comprising computer software stored in a non transitory computer-readable memory medium that is executed by at least one data processor that comprises part of the system and adapted for executing the method of any of the preceding claims.

15. A non-transitory computer-readable medium that contains software program instructions, where execution of the software program instructions by at least one data processor results in performance of operations that comprise execution of the method as in any one of claims 1 to 13.
